(19) **Europäisches Patentamt / European Patent Office / Office européen des brevets**

(11) **EP 4 679 513 A1**

(12) **EUROPEAN PATENT APPLICATION**

(43) Date of publication:
14.01.2026 Bulletin 2026/03

(21) Application number: 25178449.2

(22) Date of filing: 23.05.2025

(51) International Patent Classification (IPC):
$H01M\ 4/04^{(2006.01)}$  $H01M\ 4/13^{(2010.01)}$
$H01M\ 4/70^{(2006.01)}$  $H01M\ 10/04^{(2006.01)}$
$H01M\ 10/0587^{(2010.01)}$  $H01M\ 50/103^{(2021.01)}$
$H01M\ 50/107^{(2021.01)}$  $H01M\ 50/167^{(2021.01)}$
$H01M\ 50/463^{(2021.01)}$  $H01M\ 10/0585^{(2010.01)}$
$H01M\ 4/02^{(2006.01)}$

(52) Cooperative Patent Classification (CPC):
H01M 10/0422; H01M 4/0404; H01M 4/13;
H01M 4/70; H01M 10/0587; H01M 50/103;
H01M 50/107; H01M 50/167; H01M 50/463;
H01M 10/0585; H01M 2004/021; H01M 2004/027;
Y02E 60/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 11.07.2024 CN 202410934378

(71) Applicant: AESC Japan Ltd.
Yokohama-Shi, Kanagawa 220-0012 (JP)

(72) Inventor: ZHANG, Wenjing
Wuxi City, 214443 (CN)

(74) Representative: Becker, Eberhard
Becker Kurig & Partner
Patentanwälte mbB
Bavariastraße 7
80336 München (DE)

(54) **SECONDARY BATTERY, BATTERY ASSEMBLY AND ELECTRONIC DEVICE**

(57) A secondary battery includes a negative electrode sheet (20), a positive electrode sheet (10), and a separator (122) located between the positive electrode sheet and the negative electrode sheet. The negative electrode sheet includes the negative active material layer (26) includes a negative straight region (24) and a negative thinned region (22) located at one end of the negative straight region in a first direction. The positive electrode sheet (10) includes the positive active material layer (16) includes a positive straight region (14) and a positive thinned region (12) located at one end of the positive straight region away from the first direction. In the first direction, the positive active material layer includes a protruding portion (162) that extends beyond the negative straight region. The protruding portion overlaps with an orthogonal projection of the negative thinned region in a second direction perpendicular to the first direction.

FIG. 7

EP 4 679 513 A1

## Description

## BACKGROUND

Technical Field

The disclosure relates to a secondary battery, a battery assembly, and an electronic device.

Description of Prior art

In the field of new energy power batteries, common power batteries include soft-pack batteries, square-casing batteries, and cylindrical batteries. A cylindrical battery refers to a cylindrical wound-cell battery, which includes a casing and a terminal assembly encapsulated in the casing. The terminal assembly includes a wound positive electrode sheet and a wound negative electrode sheet, with the separator located between the positive electrode sheet and the negative electrode sheet and used to separate the positive electrode sheet and the negative electrode sheet.

## SUMMARY

In view of the problems found in the prior art, the disclosure aims to provide a secondary battery, a battery assembly, and an electronic device in which at least a capacity limit of a negative electrode sheet is improved and energy density of the secondary battery is increased.

To achieve the above, the embodiments of the disclosure provide a secondary battery including a negative electrode sheet, a positive electrode sheet, and a separator. The negative electrode sheet includes a negative current collector and a negative active material layer. The negative active material layer includes a negative straight region and a negative thinned region located at one end of the negative straight region in a first direction. The positive electrode sheet includes a positive current collector and a positive active material layer. The positive active material layer includes a positive straight region and a positive thinned region located at one end of the positive straight region away from the first direction. The separator is located between the positive electrode sheet and the negative electrode sheet. The positive active material layer includes a protruding portion extending beyond the negative straight region in the first direction. The protruding portion overlaps with an orthogonal projection of the negative thinned region in a second direction perpendicular to the first direction. A thinning depth of a region of the negative thinned region corresponding to the protruding portion is not greater than 9 μm.

In some embodiments, the thinning depth is a difference value between a lowest thickness point in the region of the negative thinned region corresponding to the protruding portion and an average thickness of the negative straight region. The thinning depth of the negative thinned region ranges between greater than or equal to 0 μm and less than or equal to 5 μm.

In some embodiments, in the first direction, a width of the protruding portion ranges from 1.0 mm to 2 mm.

In some embodiments, within the negative thinned region corresponding to the protruding portion, a distance from a lowest point of the thinned region with a minimum thickness to a position where the negative active material layer meets the negative current collector ranges from 1mm to 3mm.

In some embodiments, a thickness of the separator is consistent in the first direction. Ionic conductivity of the separator in a corresponding region in the first direction is consistent. Within the negative thinned region corresponding to the protruding portion, a range of a thickness of the negative thinned region is not greater than 3.73μm.

In some embodiments, within the negative thinned region corresponding to the protruding portion, a standard deviation of a thickness of the negative thinned region is not greater than 1.24.

In some embodiments, in a thickness direction of the positive current collector perpendicular to the first direction, the positive active material layer is arranged on both opposite sides of the positive current collector. In a thickness direction of the negative current collector perpendicular to the first direction, the negative active material layer is arranged on both opposite sides of the negative current collector. At regions of the negative electrode sheet and the positive electrode sheet corresponding to the protruding portion, a ratio of a negative capacity per unit area to a positive capacity per unit area is ≥1.

In some embodiments, in the first direction, the negative current collector includes a negative tab protruding from the negative thinned region, and the secondary battery is a cylindrical battery.

The embodiments of the disclosure further provide a battery assembly including the secondary battery according to any one of the above.

The embodiments of the disclosure further provide an electronic device including the battery assembly.

Beneficial technical effects of the disclosure include the following:

In the embodiments of the disclosure, by configuring the positive active material layer to have the protruding portion and configuring the thinning depth of the protruding portion corresponding to the negative thinned region to be not greater than 9 μm, the capacity limit of the negative electrode sheet is improved, and the capacity is increased. Further, the technical problem of lithium deposition in the negative thinned region is avoided, the safety of the battery is enhanced, and a balance between capacity and safety is achieved.

## BRIEF DESCRIPTION OF THE DRAWINGS

To make the technical solutions provided in the embodiments of the disclosure or the prior art more clearly illustrated, several accompanying drawings required by the embodiments or the prior art for description are briefly introduced as follows. Obviously, the drawings in the following description are some embodiments of the disclosure, and for a person having ordinary skill in the art, other drawings can be obtained based on these drawings without an inventive effort.

FIG. 1 is a schematic view illustrating an electronic device of the embodiment of the disclosure as a vehicle.

FIG. 2 is a perspective view illustrating a secondary battery according to an embodiment of the disclosure.

FIG. 3 is a cross-sectional view illustrating the secondary battery according to an embodiment of the disclosure.

FIG. 4A and FIG. 4B are views illustrating a process of manufacturing a positive electrode sheet according to an embodiment of the disclosure.

FIG. 5A and FIG. 5B are views illustrating a process of manufacturing a negative electrode sheet according to an embodiment of the disclosure.

FIG. 6A is a structural schematic view of a positive electrode sheet and a negative electrode sheet in a square-casing battery or a soft-pack battery of the prior art.

FIG. 6B is a structural schematic view of a positive electrode sheet and a negative electrode sheet in another square-casing battery, another soft-pack battery, or a cylindrical battery.

FIG. 7 is a structural schematic view of the positive electrode sheet and the negative electrode sheet of the cylindrical battery according to an embodiment of the disclosure.

FIG. 8A is a curve graph illustrating changes in thickness percentages of an active material layer according to some embodiments of the disclosure.

FIG. 8B is a distribution graph of a coating transverse thickness of the active material layer according to some embodiments of the disclosure.

FIG. 8C is a graph illustrating changes in single-surface thicknesses of a negative active material layer in the prior art and in an embodiment of the disclosure.

FIG. 9 is a structural schematic top view of a coating gasket according to some embodiments of the disclosure.

## DESCRIPTION OF THE EMBODIMENTS

For a better understanding of the spirit of the embodiments of this disclosure, further explanations are provided below together with some preferred embodiments of the disclosure.

The embodiments of this disclosure are to be described in detail in the following paragraphs. Throughout the specification of the disclosure, similar or like components and components with similar or like functions are represented by similar reference numerals. The embodiments related to the drawings described herein are illustrative, graphical, and provided for a basic understanding of the disclosure. The embodiments of the disclosure should not be interpreted as limitations of the disclosure.

As used herein, the terms "substantially", "generally", "essentially", and "approximately" are used to describe and explain small variations. When used together with an event or circumstance, these terms may refer to examples where the event or circumstance occurs precisely as well as examples where the event or circumstance occurs very approximately.

In the specification, unless specifically designated or limited, relative terms such as: "central", "longitudinal", "lateral", "front", "rear", "right", "left", "internal", "external", "lower", "higher", "horizontal", "vertical", "above", "below", "upper", "lower", "top", "bottom", and their derivatives (such as "horizontally", "downwardly", "upwardly", etc.) shall be interpreted as referring to the orientation described in the discussion or shown in the drawings. These relative terms are used only for descriptive convenience and do not require that the disclosure be constructed or operated in a particular direction.

For ease of description, "first", "second", "third", etc. may be used herein to distinguish different components in one figure or a series of figures. "First", "second", "third" etc. are not intended to describe the corresponding components.

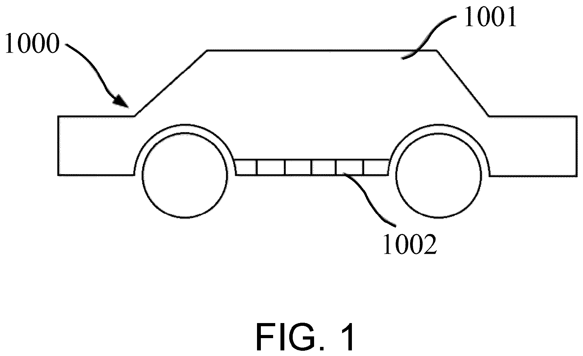

For ease of description, the following embodiments are described by taking an electronic device as a vehicle. FIG. 1 is a schematic view illustrating an electronic device of the embodiment of the disclosure as a vehicle.

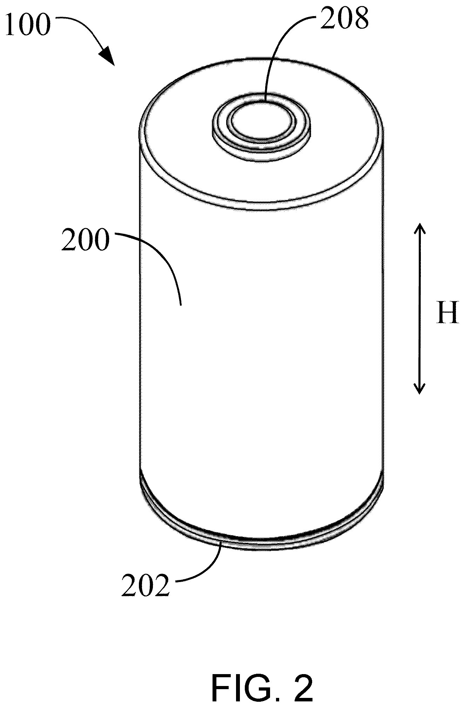

Referring to FIG. 1, a battery assembly 1002 is disposed inside a vehicle 1000, and the battery assembly 1002 may be disposed at a bottom portion (as shown in FIG. 1), a front portion, a tail portion, or any other appropriate position of a vehicle body 1001. The battery assembly 1002 may be used for power supply to the vehicle 1000, for example, the battery assembly 1002 may act as an operating power source or a driving power source of the vehicle 1000. The battery assembly 1002 may include a plurality of cylindrical batteries (such as a cylindrical battery 100 in FIG. 2) and a casing accommodating the plurality of cylindrical batteries.

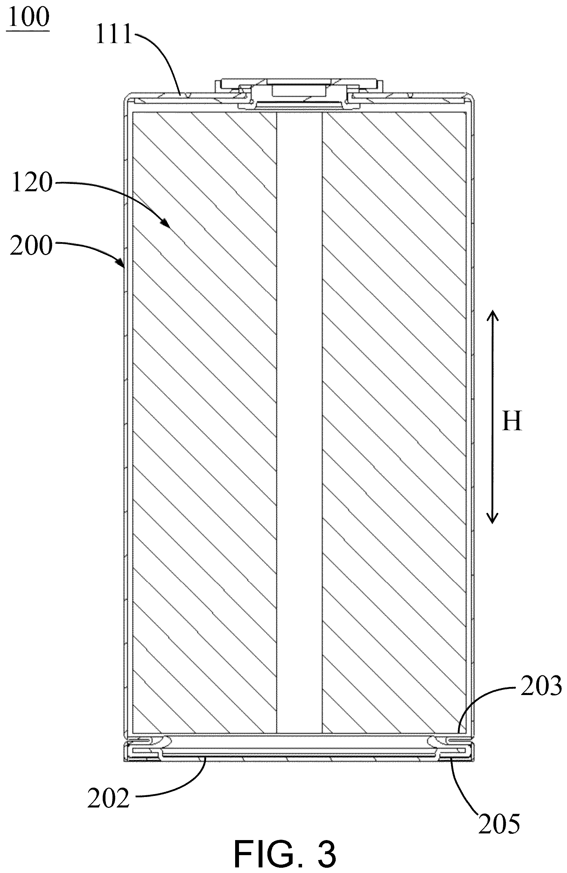

FIG. 2 is a perspective view illustrating the cylindrical battery 100 according to an embodiment of the disclosure, and FIG. 3 is a cross-sectional view illustrating the cylindrical battery 100 according to an embodiment of the disclosure.

Referring to FIG. 2 and FIG. 3, the cylindrical battery 100 includes a terminal assembly 120, an outer casing 200, and a cover plate 202. The outer casing 200 and the cover plate 202 are components that accommodate the terminal assembly 120 together. A material of the outer casing 200 may be any one of various available materials, such as copper, iron, aluminum, steel, aluminum alloy, etc. The outer casing 200 may be in a cylindrical shape and define an accommodating cavity, with the terminal assembly 120 arranged inside the accommodating cavity. A diameter size of the outer casing 200 may be determined according to a specific size of the terminal assembly 120, such as 18mm, 21mm, 46mm, etc. In some embodiments, the cylindrical battery 100 is a 4680 cylindrical battery.

The outer casing 200 may be connected to a negative terminal of the terminal assembly 120. One end of the outer casing 200 in a height direction H may have a mounting opening 205, and the cover plate 202 is arranged at the mounting opening 205 and seals the accommodating cavity. The cylindrical battery 100 may also have a terminal post 208 at one end opposite to the cover plate 202, and the terminal post 208 may be connected to a positive terminal of the terminal assembly 120. It shall be understood that the terminal post 208 and the outer casing 200 are in an insulated fitting state to avoid battery short circuit.

Referring to FIG. 3, the outer casing 200 also has a crimping portion 203 protruding inward at a position adjacent to the mounting opening 205. In the height direction H of the cylindrical battery 100, the terminal assembly 120 is arranged between an end wall 111 and the crimping portion 203, and the crimping portion 203 can restrict axial movement (movement in the height direction H) of the terminal assembly 120 between the end wall 111 and the crimping portion 203 of the outer casing 200. A weak portion may be arranged on the cover plate 202, so that when thermal runaway occurs in the battery, the high-temperature and high-pressure emissions from the interior may be discharged to the outside from the bottom of the battery after breaking through the weak portion on the cover plate 202, so the emissions are well discharged.

The terminal assembly 120 may include a wound positive electrode sheet and a wound negative electrode sheet, and a separator is arranged between the positive electrode sheet and the negative electrode sheet. A material of the separator may be, for example, polypropylene (PP) or polyethylene (PE), etc. In order to protect and insulate the terminal assembly 120, the terminal assembly 120 may also be covered with an insulating film, and the insulating film may be made of, for example, PP, PE, polyethylene terephthalate (PET), polyvinyl chloride (PVC), or other polymer materials.

The terminal assembly 120 has a positive tab and a negative tab arranged at both ends in the height direction H of the cylindrical battery 100. In some embodiment, the positive tab 125 faces the end wall 111 and is electrically connected to the terminal post 208, making the terminal post 208 positively charged. The negative tab 124 faces the mounting opening 205 and is electrically connected to the outer casing 200, making the outer casing 200 negatively charged. However, in other embodiments, the negative tab may be connected to the terminal post 208, and the positive tab 125 is connected to the outer casing 200.

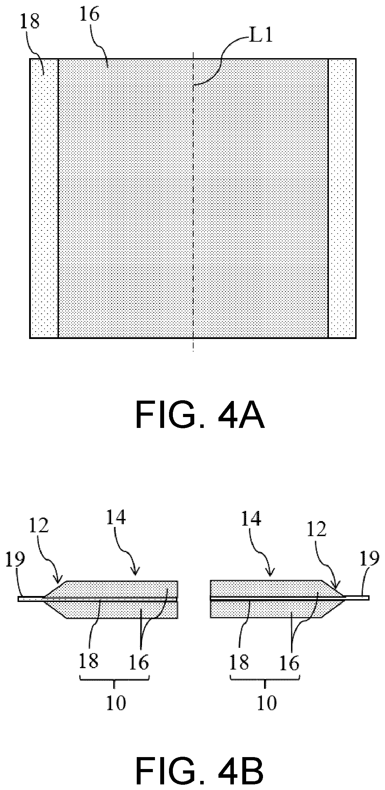

FIG. 4A and FIG. 4B are views illustrating a process of manufacturing a positive electrode sheet according to an embodiment of the disclosure. Herein, FIG. 4A is a plan view, and FIG. 4B is a cross-sectional view. In the embodiment shown in FIG. 4A and FIG. 4B, the positive and negative electrode sheets are manufactured through a 1-out-2 slitting process (wherein an electrode plate is cut into two electrode plates).

To be specific, referring to FIG. 4A and FIG. 4B, the manufacturing method of the positive electrode sheet includes coating a positive active material layer 16 on both side surfaces of a positive current collector 18, with an edge portion of the positive current collector 18 not coated with a positive active material. A portion of the positive current collector 18 without the positive active material layer 16 constitutes a positive tab 19. The positive active material layer 16 adjacent to the positive tab 19 forms a positive thinned region 12. Next, the positive current collector 18 and the positive active material layer 16 may be cut along a dotted line L1, so that two positive electrode sheets 10 as shown in FIG. 4B are obtained. Each positive electrode sheet 10 has the positive thinned region 12 only on one side of the positive active material layer 16. The positive thinned region 12 is adjacent to a non-thinned region, i.e., a positive straight region 14. A thickness of the positive straight region 14 may be greater than a thickness of the positive thinned region 12. The thickness of the positive thinned region 12 is substantially uniform. In a direction from the positive straight region 14 to the positive tab 19, the thickness of the positive thinned region 12 gradually decreases.

In the disclosure, all thicknesses may preferably be tested through an offline laser thickness tester. In some specific embodiments, a person having ordinary skill in the art may know that thickness testing may also be performed through SEM or other thickness testing devices.

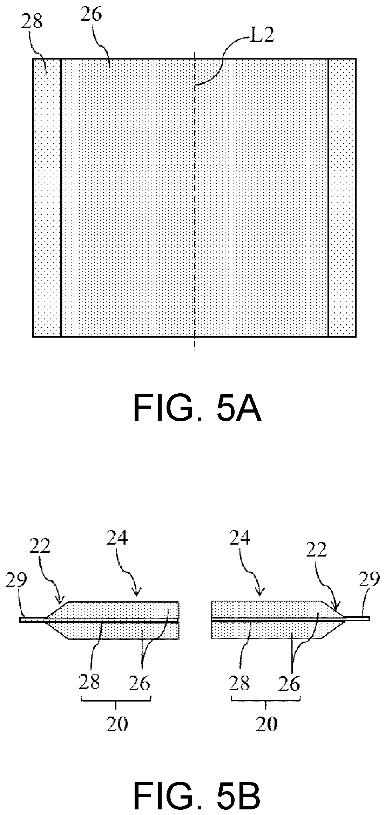

FIG. 5A and FIG. 5B are views illustrating a process of manufacturing a negative electrode sheet according to an embodiment of the disclosure. Herein, FIG. 5A is a plan view, and FIG. 5B is a cross-sectional view. Referring to FIG. 5A and FIG. 5B, the manufacturing process of the negative electrode sheet is similar to the manufacturing process of the positive electrode sheet described in the foregoing paragraphs with reference to FIG. 4A and FIG. 4B. After a negative active material layer 26 is coated on both side surfaces of a negative current collector 28, the negative current collector 28 and the negative active material layer 26 are cut along a dotted line L2, so that two negative electrode sheets 20 as shown in FIG. 5B are obtained. Each negative electrode sheet 20 has a negative thinned region 22 only on one side of the negative active material layer 26 as well. A portion of the negative current collector 28 without the negative active material layer 26 constitutes a negative tab 29. The negative thinned region 22 is adjacent to a non-thinned region, i.e., a negative straight region 24. A thickness of the negative straight region 24 may be greater than a thickness of the negative thinned region 22. The thickness of the negative thinned region 22 is substantially uniform. In a direction from the negative straight region 24 to the negative tab 29, the thickness of the negative thinned region 22 gradually decreases.

In some embodiments, taking a lithium-ion battery as an example, a material of the positive current collector 18 may be aluminum. The positive active material layer 16 may include a positive active material, and the positive active material may be, for example, lithium cobalt oxide, lithium iron phosphate, ternary lithium, or lithium manganate. A material of the negative current collector 28 may be, for example, copper. The negative active material layer 26 includes a negative active material, and the negative active material may be, for example, carbon or silicon, etc.

The examples in FIG. 4A to FIG. 5B show the positive electrode sheet and the negative electrode sheet formed through a 1-out-2 slitting process (wherein an electrode plate is cut into two electrode plates), and in other embodiments, the positive electrode sheet and the negative electrode sheet may also be formed through 2-out-4 (wherein two electrode plates are cut into four electrode plates), 3-out-6 (wherein three electrode plates are cut into six electrode plates), or other slitting processes. Further, in some other embodiments, each of the formed positive electrode sheet and the formed negative electrode sheet has the thinned region only on one side.

After the positive electrode sheets 10 and the negative electrode sheets 20 are formed, one positive electrode sheet 10 and one negative electrode sheet 20 are selected and wound or stacked in a positive electrode sheet/separator/negative electrode sheet stack to obtain a terminal assembly (e.g., the terminal assembly 120 described in the foregoing paragraphs).

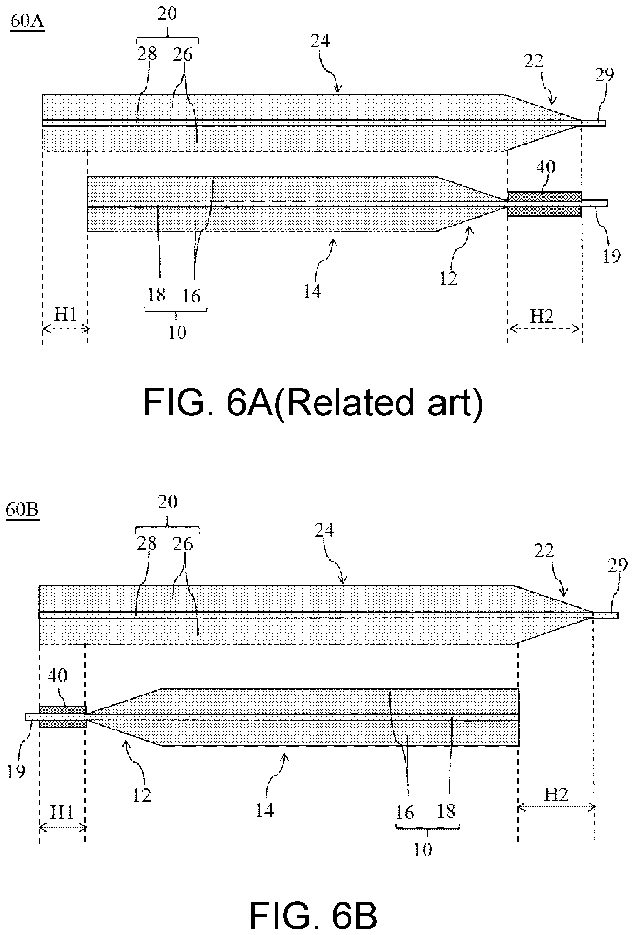

FIG. 6A is a structural schematic view of the positive electrode sheet 10 and the negative electrode sheet 20 in a square-casing battery or a soft-pack battery 60A of the prior art. In FIG. 6A, the positive tab 19 and the negative tab 29 are located on the same side of the positive electrode sheet 10 and the negative electrode sheet 20. As such, the negative thinned region 22 and the positive thinned region 12 are located on the same side of the positive electrode sheet 10 and the negative electrode sheet 20. A tab adhesive 40 may be arranged on a surface of the positive tab 19 of the positive electrode sheet 10 and may be adjacent to the positive thinned region 12.

Both ends of the negative active material layer 26 extend beyond both ends of the positive active material layer 16. Herein, the negative thinned region 22 of the negative active material layer 26 of the negative electrode sheet 20 does not overlap with the positive active material layer 16 of the positive electrode sheet 10. In FIG. 6A, H1 represents a distance by which one end of the negative active material layer 26 (its negative straight region 24) extends beyond one end of the positive active material layer 16 (its positive straight region 14), and H2 represents a distance by which the other end of the negative active material layer 26 (its negative thinned region 22) extends beyond the other end of the positive active material layer 16 (its positive thinned region 12).

For a square-casing battery or the soft-pack battery 60A with the arrangement of the positive electrode sheet 10 and negative electrode sheet 20 as shown in FIG. 6A, H2 is generally larger, for example, H2 may be approximately 3mm, which is to ensure safety at the expense of pursuing extremely high energy density. Reserving a larger distance H2 may lead to insufficient utilization of battery space.

FIG. 6B is a structural schematic view of the positive electrode sheet 10 and the negative electrode sheet 20 in another square-casing battery, another soft-pack battery, or a cylindrical battery 60B. Referring to FIG. 6B, the positive tab 19 and the negative tab 29 are located on different sides of the positive electrode sheet 10 and the negative electrode sheet 20. As such, the negative thinned region 22 of the negative active material layer 26 and the positive thinned region 12 of the positive active material layer 16 are located on the same side of the positive electrode sheet 10 and negative electrode sheet 20. Both ends of the negative active material layer 26 extend beyond both ends of the positive active material layer 16. Herein, the negative thinned region 22 of the negative active material layer 26 of the negative electrode sheet 20 does not overlap with the positive active material layer 16 of the positive electrode sheet 10. In FIG. 6B, H1 represents the distance by which one end of the negative active material layer 26 (its negative straight region 24) extends beyond one end of the positive active material layer 16 (its positive thinned region 12), and H2 represents the distance by which the other end of the negative active material layer 26 (its negative thinned region 22) extends beyond the other end of the positive active material layer 16 (its positive straight region 14).

Similar to FIG. 6A, for a square-casing battery or the soft-pack battery or the cylindrical battery 60B with the arrangement of the positive electrode sheet 10 and negative electrode sheet 20 as shown in FIG. 6B, H2 is generally larger, for example, H2 may be approximately 3mm, which is to ensure safety at the expense of pursuing extremely high energy density. Reserving a larger distance H2 may lead to insufficient utilization of battery space.

Typically, a full-tab design of a large cylindrical battery pursues high energy density in design, and the H2 limit requirement is 1mm to 1.5mm. The thinned region of the negative electrode sheet corresponds to the straight region of the positive electrode sheet. Due to the presence of the negative thinned region 22, the negative active material in the H2 corresponding region has a lower negative capacity compared to the negative active material of the same width, which easily causes a cell balance (CB, equal to negative capacity per unit area / positive capacity per unit area) value to deviate from the design, resulting in lithium plating on the negative terminal.

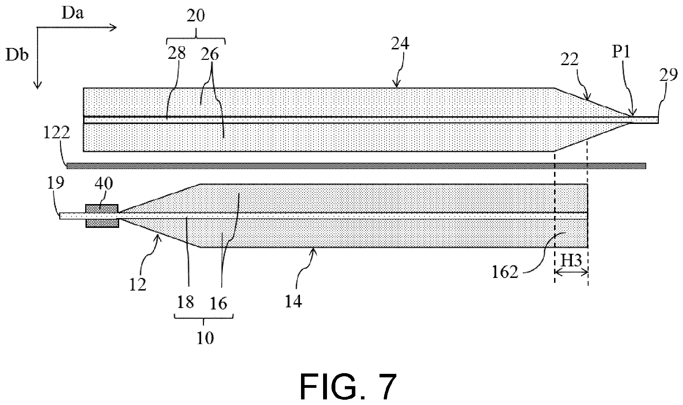

FIG. 7 is a structural schematic view of the positive electrode sheet and the negative electrode sheet of the cylindrical battery according to an embodiment of the disclosure. Referring to FIG. 7, a terminal assembly (e.g., the terminal assembly 120) of a cylindrical battery (e.g., the cylindrical battery 100) may include the positive electrode sheet 10, the negative electrode sheet 20, and a separator 122 located between the positive electrode sheet 10 and the negative electrode sheet 20. The positive electrode sheet 10, the negative electrode sheet 20, and the separator 122 may be stacked and wound to form the terminal assembly. A first direction Da in FIG. 7 is parallel to a winding axis of the positive electrode sheet 10, the negative electrode sheet 20, and the separator 122. The first direction Da in FIG. 7 may correspond to the height direction H from top to bottom in FIG. 3.

To be specific, the positive electrode sheet 10 may include the positive current collector 18 and the positive active material layer 16. The positive active material layer 16 includes the positive straight region 14 and the positive thinned region 12 located at one end of the positive straight region 14 away from the first direction Da. The thickness of the positive thinned region 12 may be less than the thickness of the positive straight region 14. The negative electrode sheet 20 may include the negative current collector 28 and the negative active material layer 26. The negative active material layer 26 includes the negative straight region 24 and the negative thinned region 22 located at one end (the right end shown in FIG. 7) of the negative straight region 24 in the first direction Da. The thickness of the negative thinned region 22 may be less than the thickness of the negative straight region 24.

A second direction Db perpendicular to the first direction Da may be a thickness direction of the positive current collector 18 and the negative current collector 28. The positive active material layer 16 may be arranged on both opposite sides of the positive current collector 18 in the second direction Db, and the negative active material layer 26 may be arranged on both opposite sides of the negative current collector 28 in the second direction Db. The positive active material layer 16 and the negative active material layer 26 may be formed by coating on the positive current collector 18 and the negative current collector 28 through a coating device.

In the first direction Da, the positive active material layer 16 may include a protruding portion 162 that extends beyond the negative straight region 24. A width of the protruding portion 162 in the first direction Da is H3. The protruding portion 162 overlaps with an orthogonal projection of the negative thinned region 22 of the negative active material layer 26 in the second direction Db perpendicular to the first direction Da.

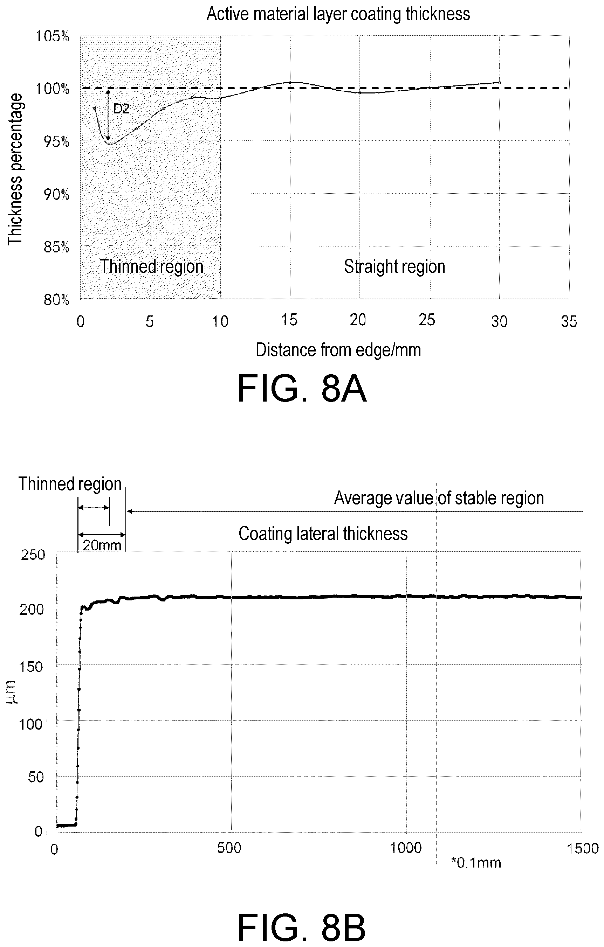

FIG. 8A is a curve graph illustrating changes in thickness percentages of an active material layer according to some embodiments of the disclosure. The meaning of the thinned region in the disclosure may be better understood with reference to FIG. 8A. In FIG. 8A, the horizontal axis represents a distance from an edge of the active material layer, the horizontal axis may correspond to the first direction Da in FIG. 7, and the vertical axis represents a thickness percentage of the active material layer on a single surface of the current collector. As shown in FIG. 8A, the thinned region refers to the region starting from an initial point where the thickness begins to decrease by more than 1% of the straight region thickness (e.g., the 100% thickness percentage in FIG. 8A) after thickness fluctuation near a width edge (e.g., corresponding to the edge of the negative straight region in the first direction Da in FIG. 7) of the straight region, and then the thickness decreases successively.

Referring to FIG. 7, the negative thinned region 22 corresponding to the protruding portion 162 of the positive active material layer 16 has a thinning depth, that is, the negative thinned region 22 in the width H3 region has a thinning depth. Referring to FIG. 8A, which shows a thinning depth D2. It shall be understood that the thinning depth D2 refers to a difference value between a lowest thickness point of the thinned region and an average thickness (which can be represented by 100% thickness percentage in FIG. 8A) of the straight region of the active material layer of the electrode sheet. Referring to FIG. 8B, the average thickness of the straight region refers to an average value of the thickness of the active material layer in a 50mm length straight region (also called a stable region) selected after 20mm from the edge of the thinned region.

In some embodiments, the thinning depth of the negative thinned region 22 is not greater than 9μm. In the prior art, typically, the thinning depth is approximately 10μm. According to the embodiments of the disclosure, the thinning depth of the negative thinned region 22 is configured to be not greater than 9μm, so that the negative active material in the portion where the negative thinned region 22 overlaps with the positive active material layer 16 in projection can be increased. Therefore, in the same active material area region, a capacity limit is increased, the technical problem of lithium deposition in the negative thinned region is avoided, the safety of the battery is improved, and a balance between capacity and safety is achieved.

In the embodiments where the secondary battery is a cylindrical battery, in the first direction Da, the negative current collector 28 may include a negative tab 29 protruding from the negative thinned region 22. In a direction away from the first direction Da, the positive current collector 18 may include a positive tab 19 protruding from the positive thinned region 12. In some embodiments, the tab adhesive 40 is arranged on a surface of the positive tab 19 of the positive electrode sheet 10. The tab adhesive 40 may be adjacent to the positive thinned region 12. Cylindrical batteries pursue high energy density in design. By configuring the thinning depth of the negative thinned region 22 of the negative electrode sheet 20 of the cylindrical battery to be not greater than 9μm, the capacity limit in the same active material area region is increased, the technical problem of lithium deposition in the negative thinned region is avoided, the safety of the cylindrical battery is improved, and a balance between capacity and safety is achieved.

In some embodiments, a ratio of a height of the cylindrical battery (as shown in FIG. 3, the distance from the end wall 111 to the cover plate 202) to a diameter (outer diameter) ranges from 1.7 to 3.3, for example, the height is 80 mm and the diameter is 46 mm; another example is that the height is 15 mm and the diameter is 46 mm. In some embodiments, the cylindrical battery may be a 4680 cylindrical battery.

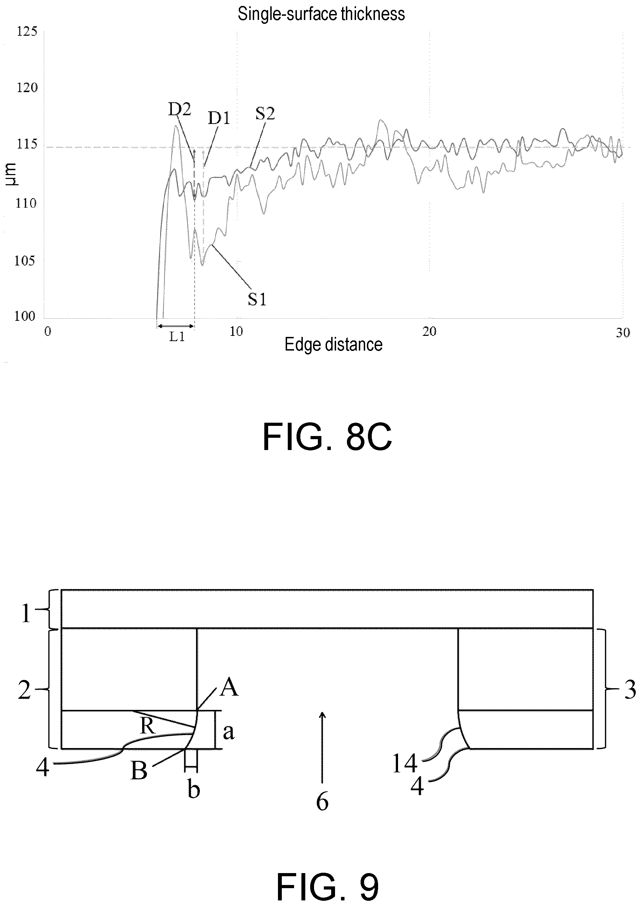

In some embodiments, the thinning depth of the negative thinned region 22 ranges between greater than or equal to 0μm and less than or equal to 5μm. FIG. 8C is a graph illustrating changes in single-surface thicknesses of a negative active material layer in the prior art and in an embodiment of the disclosure. Curve S1 represents the change curve of the single-surface thickness of the negative active material layer in the prior art, and curve S2 represents the change curve of the single-surface thickness of the negative active material layer in an embodiment of the disclosure. In this embodiment, the average thickness of the straight region of the negative active material layer may be approximately 115μm. As can be seen from curve S1, a thinning depth D1 of the negative thinned region in the prior art reaches approximately 10μm, which may be because the existing coating device design can only achieve a thinning depth D1 of 10μm. As can be seen from curve S2, a thinning depth D2 of the negative thinned region of the negative active material layer in the embodiment of the disclosure may be improved to not greater than 5μm. This range of thinning depth, greater than or equal to 0μm and less than or equal to 5μm, may optimally increase the negative active material in the portion where the negative thinned region 22 overlaps with the positive active material layer 16 in projection when implementable in the manufacturing process, so the capacity limit is increased.

With reference to FIG. 7 and FIG. 8C, within the negative thinned region 22 corresponding to the protruding portion 162 (the negative thinned region 22 corresponding to the width H3), a distance L1 from a lowest point D2 where the thickness of the negative thinned region is minimum to a position P1 where the negative active material layer 22 meets the negative current collector 28 is in the range of 1mm to 3mm. This may reduce a film region of the negative active material layer 26 occupying more area of the negative current collector, so material waste is avoided.

Referring to FIG. 7 again, the protruding portion 162 of the positive active material layer 16 is part of the positive straight region 14. That is, the positive straight region 14 corresponds to the negative thinned region 22. The positive thinned region 12 corresponds to the negative straight region 24. The negative straight region 24 extends beyond the positive thinned region 12 in the direction away from the first direction Da. By configuring a portion of the positive straight region 14 as the protruding portion 162 overlapping with the negative thinned region 22, the capacity limit may be increased. Additionally, in the embodiments where the secondary battery is a cylindrical battery, in order to improve the battery energy density, a spacing between the wound positive electrode sheet 10 and the negative electrode sheet 20 is small. Further, when the cylindrical battery is in use, the negative electrode sheet 20 may swell. By arranging the protruding portion 162 of the positive electrode sheet 10 to enter the negative thinned region 22 and making the protruding portion 162 and the negative thinned region 22 overlap in orthogonal projection in the second direction Db, a sharp portion of the positive straight region 14 is prevented from directly facing the negative straight region 24, so stress in the cylindrical battery is relieved.

In some embodiments, the width H3 of the protruding portion 162 is in the range of 1.0mm to 2mm. Such a range of the width H3 can increase the energy density of the secondary battery at the edge limit where lithium deposition is not considered possible.

In some embodiments, within the negative thinned region 22 corresponding to the protruding portion 162, a range of the thickness of the negative thinned region 22 is not greater than 3.73μm. In comparison, in the prior art, the range of the thickness of the negative thinned region is 12μm. By reducing the range of the thickness of the negative thinned region 22, the negative active material in the overlapping portion of the negative thinned region 22 and the protruding portion 162 may be increased, so the capacity limit is further increased, and lithium deposition in the negative thinned region is avoided.

In some embodiments, within the negative thinned region 22 corresponding to the protruding portion 162, a standard deviation of the thickness of the negative thinned region 22 is not greater than 1.24. In comparison, in the prior art, the standard deviation of the thickness of the negative thinned region is 2.23. Evidently, compared to prior art, the negative thinned region 22 exhibits improved thickness uniformity. By improving the thickness uniformity of the negative thinned region 22, the maximum capacity limit may be stable, and lithium deposition in the negative thinned region is avoided.

The standard deviation of the thickness may be tested in the following way: select several test points within the negative thinned region 22 corresponding to the protruding portion 162, measure the thickness at these test points, and then calculate according to the standard deviation formula. The standard deviation formula is as follows:

$$S = \sqrt{\frac{\sum_{i=1}^{n}(x_i - \overline{x})^2}{n-1}} \quad ,$$

where S represents the standard deviation, $\overline{x}$ represents the arithmetic mean of the thickness measurements at each test point, $x_i$ represents the thickness measurement at the $i^{th}$ test point, and n represents the number of test points.

In some embodiments, at regions of the negative electrode sheet 20 and the positive electrode sheet 10 corresponding to the protruding portion 162 (i.e., the H3 corresponding region), a ratio of a negative capacity per unit area to a positive capacity per unit area is ≥1, that is, N/P≥1. In comparison, in the prior art, the N/P corresponding to the negative thinned region 22 is <1, while the N/P of conventional negative electrode sheet and positive electrode sheet is >1. In other words, the capacity limit in the same active material area region is improved in the disclosure.

In some embodiments, a thickness of the separator 122 in the first direction Da is consistent. It should be understood that thickness consistency means that in the first direction Da, the separator 122 does not have specific regions (e.g., the region between the negative thinned region 22 and the protruding portion 162) with added extra coating layers (e.g., a blocking layer), and the separator 122 is the same in all regions of the separator 122. It shall also be understood that thickness consistency does not exclude exceptions such as production errors in the microscopic thickness of the separator 122 itself. In this embodiment, the ionic conductivity of the separator 122 is consistent in the corresponding regions in the first direction Da, which means that the ionic conductivity of the separator 122 is consistent in all regions of the separator 122. It shall be understood that ionic conductivity consistency may include process errors generated from the production of the separator 122.

In the manufacturing process of cylindrical battery, a coating device is usually used to coat a negative terminal slurry on a current collector (e.g., the negative current collector 28) to form an active material layer (e.g., the negative active material layer 26). The coating device includes a coating gasket, and by structural design of the coating gasket, the formed negative active material layer 26 may satisfy the parameter requirements described in the foregoing paragraphs with reference to FIG.7.

FIG. 9 is a structural schematic top view of a coating gasket according to some embodiments of the disclosure. Referring to FIG.9, the coating gasket includes a gasket body 1, a first baffle plate 2, and a second baffle plate 3. To be specific, the first baffle plate 2 and the second baffle plate 3 are connected to opposite ends of the gasket body 1. Ends of the first baffle plate 2 and the second baffle plate 3 facing each other are each provided with a chamfered region 4, so as to form a discharge port 6 in a flared form together. The first baffle plate 2, the second baffle plate 3, and the gasket body 1 surround a region where a slurry of a negative silicon-containing system flows. The slurry of the negative silicon-containing system flows out from the gasket body 1 through the discharge port 6 formed at the ends of the first baffle plate 2 and the second baffle plate 3.

The point where the projection of the chamfered region 4 in a thickness direction of the gasket body 1 is perpendicularly closest to the gasket body 1 is A, and the point where this projection is perpendicularly farthest from the gasket body 1 is B. A perpendicular distance from A to B in a direction parallel to a length direction of the gasket body 1 is a, and a perpendicular distance from B to A in a direction parallel to a width direction of the gasket body 1 is b, where a>b.

The gasket body 1 may be a rectangular plate with two opposite ends in its length direction. The first baffle plate 2, the second baffle plate 3, and the gasket body 1 surround the region where the slurry of the negative silicon-containing system flows. The slurry of the negative silicon-containing system flows away from the gasket body 1 and flows out through the discharge port 6 formed at the ends of the first baffle plate 2 and the second baffle plate 3.

Due to the presence of the chamfered region 4, when the slurry of the negative silicon-containing system passes through the chamfered region 4, it produces a thinned region at an edge of a negative sheet film. b determines the lateral distribution of the slurry, while a determines the longitudinal distribution of the slurry. Since b<a, the lateral distribution of the slurry is small, and the lateral flow velocity is also small, which at least ensures that during the coating process of the negative electrode sheet of the silicon-containing system, there is no lateral bulging of the slurry at the edges of the electrode sheet when the negative electrode sheet of the silicon-containing system is coated. When a>b is satisfied, the problem of lithium deposition when the battery is fully charged due to the thinned region generated at the edge of the film sheet of the negative electrode sheet being excessively thin during the coating of the negative electrode sheet of the silicon-containing system and the thinning of the thinned region of the negative electrode sheet exceeding a design value can be solved, and lithium deposition is thus prevented.

In contrast, if b>a, when the slurry of the negative silicon-containing system passes through the chamfered region 4, a smaller portion of the slurry of the negative silicon-containing system extends outward. As a result, the thickness of the thinned region generated at the edge of the film sheet of the negative electrode sheet is excessively low, and the thinning of the thinned region of the negative electrode sheet exceeds the design value, which causes lithium deposition when the battery is fully charged.

In some embodiments, the chamfered region 4 may be a circular chamfer, and the circular chamfer may be a portion of an arc. In the embodiments where the chamfered region 4 may be a circular chamfer, a radius of the chamfered region 4 is R. In some embodiments, $R^2-a^2=(R-b)^2$. By using the coating gasket described in relation to FIG. 9 to form the negative active material layer, the formed negative active material layer may satisfy the various parameter requirements described above in relation to FIG. 7. For instance, within the negative thinned region 22 corresponding to the protruding portion 162, the thinning depth is not greater than $9\mu m$, the thinning depth is greater than or equal to $0\mu m$ and less than or equal to $5\mu m$, the distance L1 from the lowest thickness point to the position P1 is within the range of 1mm to 3mm, the range of the thickness of the negative thinned region 22 is not greater than $3.73\mu m$, and the standard deviation of the thickness of the negative thinned region 22 is not greater than 1.24, etc.

Additionally, the chamfered region 4 may be a stepped shape, which includes multiple steps from point A to point B, and a>b. As such, it is ensured that during the coating process of the negative electrode sheet of the silicon-containing system, the bulging of slurry at the edges of the electrode sheet when the negative electrode sheet of the silicon-containing system is coated. Further, the thinning of the thinned region of the negative electrode sheet does not exceed the design value, and lithium deposition when the battery is fully charged is thus avoided. In embodiments where the chamfered region 4 is arc-shaped as shown in FIG. 9, the arc-shaped chamfered region 4 is more favorable for the flow of the slurry as a fluid, and the formed thinned region is also more gradual.

Therefore, by using a coating device with the abovementioned coating gasket to form the negative active material layer, the formed negative active material layer may have an improved negative thinned region, so the effective region of the negative thinned region is improved, the width of the positive terminal is indirectly increased, the energy density of the entire battery is improved, safety is enhanced, and lithium deposition is avoided.

In the embodiments of the disclosure, the capacity limit is improved by changing the thinning depth of the negative thinned region (not greater than $9\mu m$) in the same area region, and capacity may thus be maximally improved. This region does not affect lithium ion transport and can avoid lithium deposition.

The embodiments of the disclosure further provide a battery assembly 1002 (referring to FIG. 1) including the secondary battery 100 (referring to FIG. 2) according to any one of the above.

The embodiments of the disclosure further provide an electronic device 1000 (referring to FIG. 1) including the abovementioned battery assembly 1002 (referring to FIG. 1).

The above description is only the preferred embodiments of the disclosure and is not intended to limit the disclosure. For a person having ordinary skill in the art, the disclosure may have various changes and variations. Any modifications, equivalent replacements, and improvements made without departing from the spirit and principles of the disclosure should fall within the protection scope of the disclosure.

## Claims

1. A secondary battery (100), comprising:

   a negative electrode sheet (20) comprising a negative current collector (28) and a negative active material layer (26), wherein the negative active material layer (26) comprises a negative straight region (24) and a negative thinned region (22) located at one end of the negative straight region (24) in a first direction;
   a positive electrode sheet (10) comprising a positive current collector (18) and a positive active material layer (16), wherein the positive active material layer (16) comprises a positive straight region (14) and a positive thinned region (12) located at one end of the positive straight region (14) away from the first direction; and
   a separator (122) located between the positive electrode sheet (10) and the negative electrode sheet (20),
   wherein the positive active material layer (16) comprises a protruding portion (162) extending beyond the negative straight region (24) in the first direction, the protruding portion (162) overlaps with an orthogonal projection of the negative thinned region (22) in a second direction perpendicular to the first direction, and a thinning depth of a region of the negative thinned region (22) corresponding to the protruding portion (162) is not greater than 9 $\mu m$.

2. The secondary battery (100) according to claim 1, wherein

   the thinning depth of the negative thinned region (22) is a difference value between a lowest thickness point in the region of the negative thinned region (22) corresponding to the protruding portion (162) and an average thickness of the negative straight region (24), and
   the thinning depth of the negative thinned region (22) ranges between greater than or equal to $0\mu m$ and less than or equal to $5\mu m$.

3. The secondary battery (100) according to claim 1, wherein
   in the first direction, a width of the protruding portion (162) ranges from 1.0 mm to 2mm.

4. The secondary battery (100) according to claim 1, wherein within the negative thinned region (22) corresponding to the protruding portion (162), a distance from a lowest point of the thinned region with a minimum thickness to a position where the negative active material layer (26) meets the negative current collector (28) ranges from 1mm to 3mm.

5. The secondary battery (100) according to claim 1, wherein

   a thickness of the separator (122) is consistent in the first direction,
   ionic conductivity of the separator (122) in a corresponding region in the first direction is consistent, and
   within the negative thinned region (22) corresponding to the protruding portion (162), a range of a thickness of the negative thinned region (22) is not greater than 3.73μm.

6. The secondary battery (100) according to claim 1, wherein
   within the negative thinned region (22) corresponding to the protruding portion (162), a standard deviation of a thickness of the negative thinned region (22) is not greater than 1.24.

7. The secondary battery (100) according to claim 1, wherein

   in a thickness direction of the positive current collector (18) perpendicular to the first direction, the positive active material layer (16) is arranged on both opposite sides of the positive current collector (18),
   in a thickness direction of the negative current collector (28) perpendicular to the first direction, the negative active material layer (26) is arranged on both opposite sides of the negative current collector (28), and
   at regions of the negative electrode sheet (20) and the positive electrode sheet (10) corresponding to the protruding portion (162), a ratio of a negative capacity per unit area to a positive capacity per unit area is $\geq 1$.

8. The secondary battery (100) according to claim 1, wherein in the first direction, the negative current collector (28) comprises a negative tab (29) protruding from the negative thinned region (22), and the secondary battery is a cylindrical battery (100).

9. A battery assembly (1002), comprising the secondary battery (100) according to any one of claims 1 to 8.

10. An electronic device, comprising the battery assembly (1002) according to claim 9.

FIG. 1

100

208

200

H

202

FIG. 2

FIG. 3

FIG. 4A

FIG. 4B

FIG. 5A

FIG. 5B

FIG. 6A(Related art)

FIG. 6B

FIG. 7

Active material layer coating thickness

FIG. 8A

FIG. 8B

Single-surface thickness

FIG. 8C

FIG. 9

Europäisches
Patentamt

European
Patent Office

Office européen
des brevets

# EUROPEAN SEARCH REPORT

**Application Number**

EP 25 17 8449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 745 495 A1 (ENVISION AESC JAPAN LTD [JP]) 2 December 2020 (2020-12-02) | 1,2,4-7, 9,10 | INV.<br>H01M4/04 |
| Y | * paragraphs [0008], [0015], [0042], | 3 | H01M4/13 |
| A | [0043]; figures 7,10 * | 8 | H01M4/70 |
| | ----- | | H01M10/04 |
| X | JP 7 194336 B2 (TOYOTA MOTOR CORP) 22 December 2022 (2022-12-22) | 1-10 | H01M10/0587<br>H01M50/103 |
| Y | * paragraphs [0017] - [0055], [0059]; figures 3,5A-5D * | 3 | H01M50/107<br>H01M50/167 |
| | ----- | | H01M50/463 |
| X | EP 4 187 668 A1 (PRIME PLANET ENERGY & SOLUTIONS INC [JP]) 31 May 2023 (2023-05-31) | 1,2,4-10 | H01M10/0585<br>H01M4/02 |
| Y | * paragraph [0072] * | 3 | |
| | ----- | | |
| X | EP 4 106 057 A1 (CONTEMPORARY AMPEREX TECHNOLOGY CO LTD [CN]) 21 December 2022 (2022-12-21) | 1,2,4-10 | |
| Y | * paragraph [0059] * | 3 | |
| | ----- | | |
| X | KR 2022 0109340 A (LG ENERGY SOLUTION LTD [KR]) 4 August 2022 (2022-08-04) | 1,2,8-10 | **TECHNICAL FIELDS SEARCHED (IPC)** |
| A | * paragraphs [0038], [0043], [0080], [0081], [0084], [0089], [0129], [0134]; figures 2,10 * | 3-7 | H01M |
| | ----- | | |

The present search report has been drawn up for all claims

| Place of search | Date of completion of the search | Examiner |
|---|---|---|
| Munich | 14 October 2025 | Posch, Patrick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 8449

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2025

| Patent document cited in search report | | Publication date | Patent family member(s) | | Publication date |
|---|---|---|---|---|---|
| EP 3745495 | A1 | 02-12-2020 | CN | 112018447 A | 01-12-2020 |
| | | | EP | 3745495 A1 | 02-12-2020 |
| | | | JP | 7408297 B2 | 05-01-2024 |
| | | | JP | 7742395 B2 | 19-09-2025 |
| | | | JP | 2020194732 A | 03-12-2020 |
| | | | JP | 2024037976 A | 19-03-2024 |
| | | | US | 2020381769 A1 | 03-12-2020 |
| JP 7194336 | B2 | 22-12-2022 | CN | 112310396 A | 02-02-2021 |
| | | | DE | 102020209337 A1 | 04-02-2021 |
| | | | JP | 7194336 B2 | 22-12-2022 |
| | | | JP | 2021026852 A | 22-02-2021 |
| | | | KR | 20210015680 A | 10-02-2021 |
| | | | US | 2021036332 A1 | 04-02-2021 |
| EP 4187668 | A1 | 31-05-2023 | CN | 116190871 A | 30-05-2023 |
| | | | EP | 4187668 A1 | 31-05-2023 |
| | | | JP | 7446271 B2 | 08-03-2024 |
| | | | JP | 2023079669 A | 08-06-2023 |
| | | | KR | 20230080325 A | 07-06-2023 |
| | | | US | 2023170461 A1 | 01-06-2023 |
| EP 4106057 | A1 | 21-12-2022 | CN | 115606020 A | 13-01-2023 |
| | | | EP | 4106057 A1 | 21-12-2022 |
| | | | EP | 4553915 A2 | 14-05-2025 |
| | | | US | 2022416232 A1 | 29-12-2022 |
| | | | WO | 2022165689 A1 | 11-08-2022 |
| KR 20220109340 | A | 04-08-2022 | NONE | | |

For more details about this annex : see Official Journal of the European Patent Office, No. 12/82